(19) **Europäisches Patentamt**

**European Patent Office**

**Office européen des brevets**

(11) Publication number: **0 519 662 B1**

(12) **EUROPEAN PATENT SPECIFICATION**

(45) Date of publication of patent specification: **06.09.95**　(51) Int. Cl.⁶: **B60C 3/04**

(21) Application number: **92305466.2**

(22) Date of filing: **15.06.92**

(54) **Radial tyre.**

(30) Priority: **17.06.91 JP 173188/91**
**26.08.91 JP 240396/91**
**26.12.91 JP 359473/91**

(43) Date of publication of application:
**23.12.92 Bulletin  92/52**

(45) Publication of the grant of the patent:
**06.09.95 Bulletin  95/36**

(84) Designated Contracting States:
**DE FR GB**

(56) References cited:
**EP-A- 0 314 445**
**EP-A- 0 413 574**
**US-A- 4 867 218**
**US-A- 4 915 151**

(73) Proprietor: **SUMITOMO RUBBER INDUSTRIES LIMITED**
**1-1 Tsutsuicho 1-chome**
**Chuo-ku**
**Kobe-shi**
**Hyogo-ken (JP)**

(72) Inventor: **Asano, Kazuo**
**1-1-111-105 Hiyodoridai,**
**Kita-ku**
**Kobe-shi,**
**Hyogo-ken (JP)**
Inventor: **Ookimoto, Tomoko**
**25-9 Aza Shironomae,**
**Koya**
**Itami-shi,**
**Hyogo-ken (JP)**
Inventor: **Idei, Mitsushige**
**6-2-1-1-310 Minatojima-nakamachi,**
**Chuo-ku**
**Kobe-shi,**
**Hyogo-ken (JP)**

(74) Representative: **Stewart, Charles Geoffrey**
**SP TYRES UK LIMITED**
**Technical Division**
**Fort Dunlop,**
**Erdington,**
**Birmingham B24 9OT (GB)**

## Description

The present invention relates to a radial tyre, in which reactions when against running over protrusions are mitigated to prevent the car from being damaged.

Recently, to satisfy requirements for high speed straight running performance, high speed cornering performance, steering stability, rolling resistance and the like, belted radial tyres having a low aspect ratio have been widely used for their high lateral stiffness, high cornering power and wide ground contacting width.

In such a low aspect ratio radial tyre, however as the tyre section height is relatively low, the radial distance of the inner face of the tread portion from the rim is short.

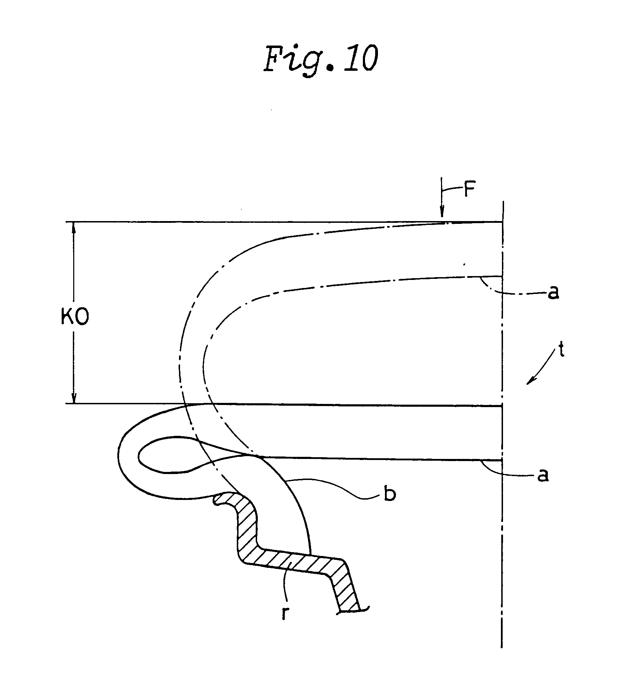

Therefore, as shown in Fig.10, when a large force F is applied to the tread, for example during running across a protrusion, the tyre (t) may be greatly deflected, and so called rim touch, i.e. an indirect contact of the inner face of the tread portion (a) with a flange of the rim (r) or direct contact of the tread portion (a) with the bead portion (b), is liable to occur.

If such rim touch occurs, shock force is directly applied to the car through the rim (r), and as a result, the durability of the car, e.g. the suspension mechanism and the like, is reduced.

To avoid this, the rigidity of the tyre sidewalls has been increased by increasing the rigidity of the carcass, providing a reinforcing layer, and/or increasing the rubber thickness of the sidewalls especially axially inwards of the carcass.

However, when the sidewall rigidity is increased in such a way, the ride comfort is deteriorated.

Further, when a tyre whose rubber thickness is increased is deflected, the distance between the tread and the bead portion becomes smaller and rim touch is rather more easily occurred than in a normal tyre. Furthermore, the tyre weight is in a normal tyre. Furthermore, the tyre weight is increased which deteriorates the steering and running performances.

An assembly of a radial tyre and a rim according to the preamble of claim 1 is known from EP-A-0 413 574.

It is therefore, an object of the present invention to provide a radial tyre in which rim touch is prevented without increasing the sidewall thickness or the carcass rigidity.

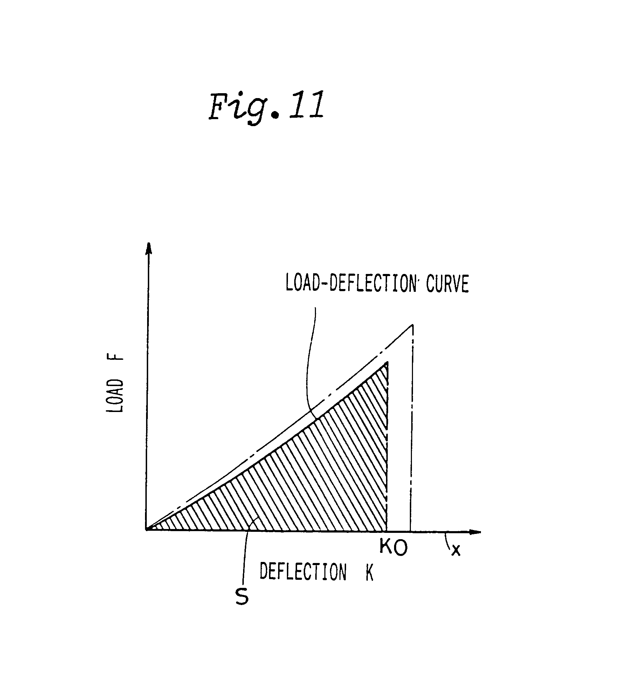

In general, as further shown in Fig.11, the amount of tyre deflection K increases in proportion to the applied load F, and the hatched area under the load/deflection curve, between the X-axis (deflection K), and a line drawn at KO perpendicular to the X-axis which is at the maximum deflection KO at which rim touch occurs, corresponds to the amount of the energy stored in the deflected tyre.

It was realised by the inventors that the larger the amount of the maximum stored energy then the larger the amount of shock absorbed.

Accordingly one aspect of the present invention comprises an assembly of a radial tyre and a rim, said radial tyre comprises a tread portion, a pair of axially spaced bead portions, a pair of sidewalls extending between the bead portions, a bead core disposed in each of the bead portions, a radial carcass extending between the bead portions and turned up around the bead cores, and a belt disposed radially outside the carcass in the tread portion, the said rim comprising a pair of bead seats for the bead portions, and a flange extending radially outwardly from the axially outer edge of each of the bead seats, said flange comprising a curved upper portion and a flat lower portion, characterised in that the sidewalls in the normally inflated state of the tyre are bulged-out so as to satisfy the following conditions:

the total (HA + HC) of a height HA and a height HC is not less than 0.818 times the total (HA + HB + HC) of the height HA, a height HB and the height HC; and

a distance HE is not more than 0.575 times a distance HD,

wherein the height HA is the radial distance between a point C and a point P1,

the height HB is the radial distance between the point P1 and a point P2,

the height HC is the radial distance between the point P2 and a point P3,

the distance HD is the radial distance between the point P3 and a point P4,

the distance HE is the axial distance between the point P3 and the point P4,

the points C and P1 being on the outer surface of the tyre tread portion (2),

the points P2, P3 and P4 being on the inner surface of the tyre at the tread portion, the bead portion and the sidewall, respectively,

the point C is at the tyre equator CO,

the points P1, P2, P3 are on a plane (X) which is parallel to the tyre equatorial plane CO and positioned at the bead heel point PO,

the point P4 is the axially outermost point of the axially inner surface of the sidewall portion,

the bead heel point PO is the intersecting point between the bead base line and the bead side face line (X),

a bead thickness TB measured normally to the tyre inner surface from said point P3 to the tyre outer surface is not more than 0.092 times the radial distance (h) between said point C and the radially outer end of the flange, the central point Q1 of the bead thickness TB, the central point Q2 of the shoulder thickness TS measured normally to the tyre inner surface from said point P2 to the tyre outer surface, and the central point Q3 of the sidewall thickness at said point P4 are positioned on a circle (L) the radius RD of which is not less than 0.77 times said distance (h).

Preferably the shoulder portions of the tyre are rounded such that the shoulder region extends between points P1 and a point P5 on the outer surface of the tyre at the same radial height as point P2 as a single radius arc having a radius not less than 0.22 times the ground contacting width.

Preferably the tyre of the assembly is inflated to 1.15 times the regular pressure specified.

Embodiments of the present invention will now be described, by way of example only, in conjunction with the accompanying drawings, in which:

Figs.1(a) and 1(b) are cross sectional views of a tyre according to the present invention;

Fig.2 is a cross sectional view of the tyre showing the deflected state;

Fig.3 is a graph showing the relationship between the height ratio (HA+HC)/(HA+HB+HC) and tyre deflection index;

Fig.4 is a graph showing the relationship between the HE/HD ratio and the tyre vertical spring constant index;

Fig.5 is a diagram illustrating the difference in load-deflection curve between a rounded shoulder tyre and a squared shoulder tyre;

Fig.6 is a graph showing the relationship between TB/h ratio and maximum absorbable energy;

Fig.7 is a graph showing the relationship between RD/h ratio and maximum absorbable energy;

Fig.8 is a cross sectional view of a modified rim flange;

Fig.9 is a graph showing the relationship between flange height, flange radius and maximum absorbable energy;

Fig.10 is a cross sectional view explaining Rim Touch;

Fig.11 is a graph showing the relationship between tyre load F and tyre deflection K.

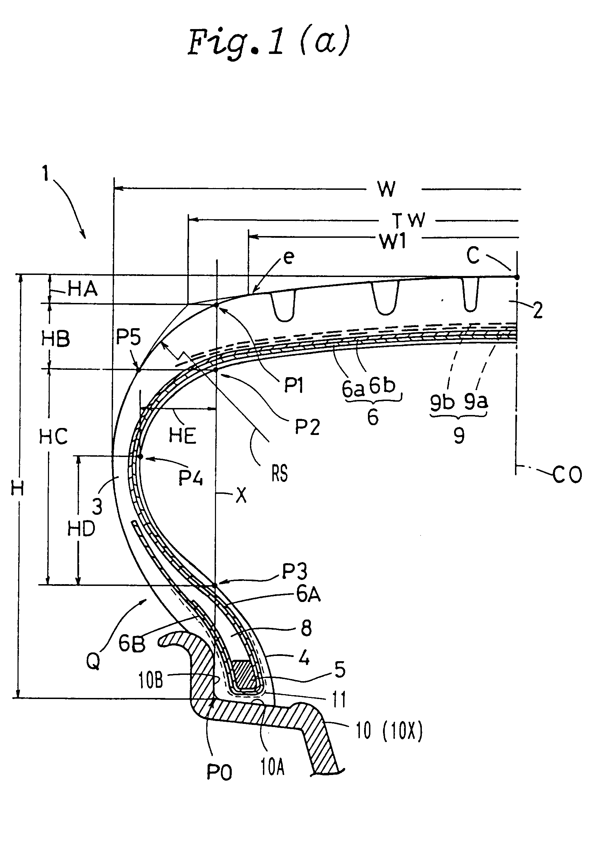

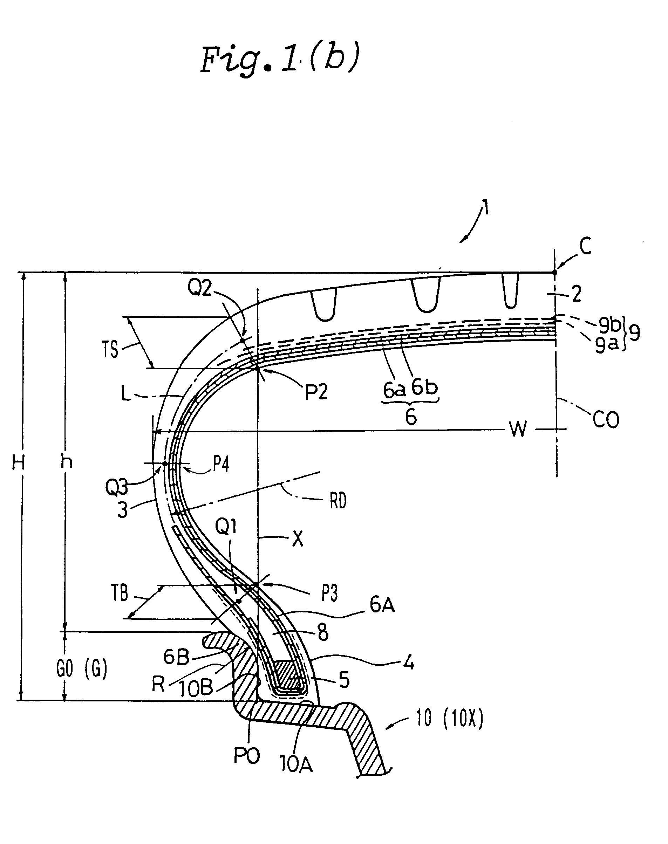

In Figs.1(a) and 1(b), the tyre 1 is for passenger cars and is shown mounted on its regular rim 10 and inflated to its regular inner pressure but not loaded.

The tyre 1 has a tread portion 2, a pair of bead portions 4, and a pair of sidewalls 3 extending between the tread edges and the bead portions 4.

The aspect ratio (section height H/section width W ) of the tyre is not more than 0.7. In this example, the aspect ratio is 0.6.

The tyre 1 further comprises a bead core 5 disposed in each of the bead portions 4, a carcass 6 extending between the bead portions 4 and turned up around the bead cores 5 from the axially inside to the outside thereof, and a belt 9 disposed radially outside the carcass crown in the tread portion 2.

The carcass 6 in this embodiment comprises two plies 6a and 6b of cords arranged radially at an angle of 75 to 90 degrees with respect to the tyre equator CO.

The inner carcass ply 6a and the outer carcass ply 6b are turned up around the bead cores 5.

The axially outwardly located turned up portions of the inner carcass ply 6a are extended radially outwardly over the radially outer edges of the axially inwardly located turned up portions of the outer carcass ply 6b, and terminated near the tyre maximum width point so as to completely cover the inward turned up edges.

For the carcass cords, organic fibre cords, e.g. nylon, polyester, rayon or the like are preferably used but metallic cords, e.g. steel, may be used. The cords of each carcass ply 6a and 6b, are crossed.

The belt 9 comprises two plies 9a and 9b of cords laid at an angle of 0 to 30 degrees with respect to the tyre equator CO the cords in each ply being substantially parallel to each other.

For the belt cords, high modulus cords, e.g. steel cord, aromatic polyamide or the like are preferably used.

The radially inner belt ply 9a is wider than the radially outer belt ply 9b.

The maximum belt width or the width of the inner belt ply 9a in this embodiment is not less than 0.8 times the tread width TW.

Each of the bead portions 4 is provided between the carcass axially inner portion 6A and each turned up portion 6B with a bead apex 8 of hard rubber extending taperingly radially outwards from the bead core 5.

Further, each of the bead portions 4 is provided with a bead reinforcing layer 11 comprising parallel steel cords laid at an angle of 20 to 70 degrees with respect to the adjacent carcass cords. The bead reinforcing layer 11 is turned up around the bead core 5 to extend along the axially inside of the main carcass portion 6A and the axially outer face of the carcass turned up portion 6B.

A bead heel point PO, defined as the intersecting point between the base line of the bead portion 4 and the axially outer surface line of the bead portion 4 should also be noted.

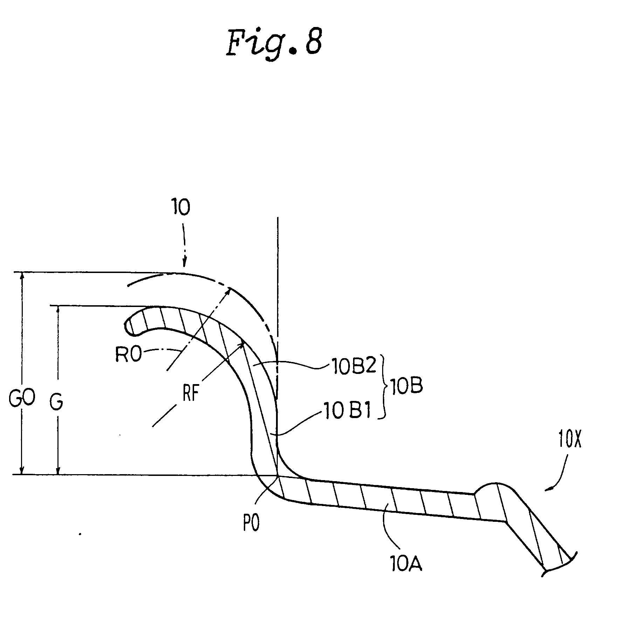

The rim 10 shown in detail in Figure 8 is a dropped centre rim and has a pair of 5° tapered bead seats 10A one for each bead portion 4, a centre well for tyre mounting, and extending radially outwardly from the axially outer edge of each of the bead seats 10A a flange 10B.

The axially inner surface of each flange 10B has a lower portion (10B1) extending perpendicular to the rotational axis of the rim and an upper portion (10B2) curved to extend radially and axially outwards from the upper end of the flat lower portion (10B1).

When the tyre 1 is mounted on its regular rim 10 as shown in Figure 1, the bead heel point PO can be alternatively defined as the intersecting point between the bead seat line and the perpendicular line of the lower flange portion (10B1).

The tyre shape is arranged in the normally inflated state of the tyre such that the sidewall portions bulge out as shown in Fig.1(a) and satisfy the following conditions:

(HA + HC)/(HA + HB + HC) is not less than 0.818, and HE/HD is not more than 0.575 where

HA is the radial distance between a point C and a point P1,

HB is the radial distance between the point P1 and a point P2,

HC is the radial distance between the point P2 and a point P3,

HD is the radial distance between the point P3 and a point P4,

HE is the axial distance between the point P3 and the point P4,

the points C and P1 are on the outer surface of the tyre tread portion 2,

the points P2, P3 and P4 are on the inner surface of the tyre at the tread portion 2, the bead portion 4 and the sidewall portion 3, respectively,

the point C is at the tyre equator CO,

the points P1, P2, P3 are on a plane (X) being parallel with the tyre equatorial plane CO and positioned at the bead heel point PO,

the point P4 is the axially outermost point of the axially inner surface of the sidewall portion 3.

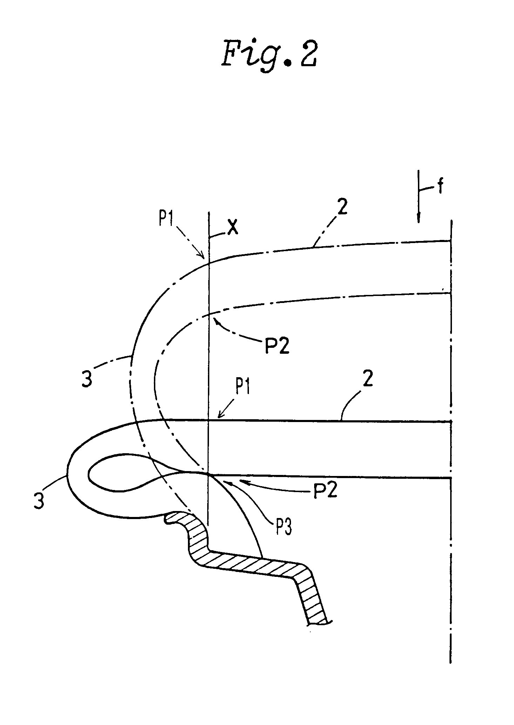

Fig.2 schematically shows the state of such a tyre deflected so that rim touch has occurred. In this state, the sidewall 3 is bent and the regions of the tyre inner surface around the points P2 and P3 contact each other.

It was seen by the inventors that the total height (HA + HC) closely relates to the clearance for the maximum tyre deflection. The total height (HA + HB + HC) is generally determined by the tyre size.

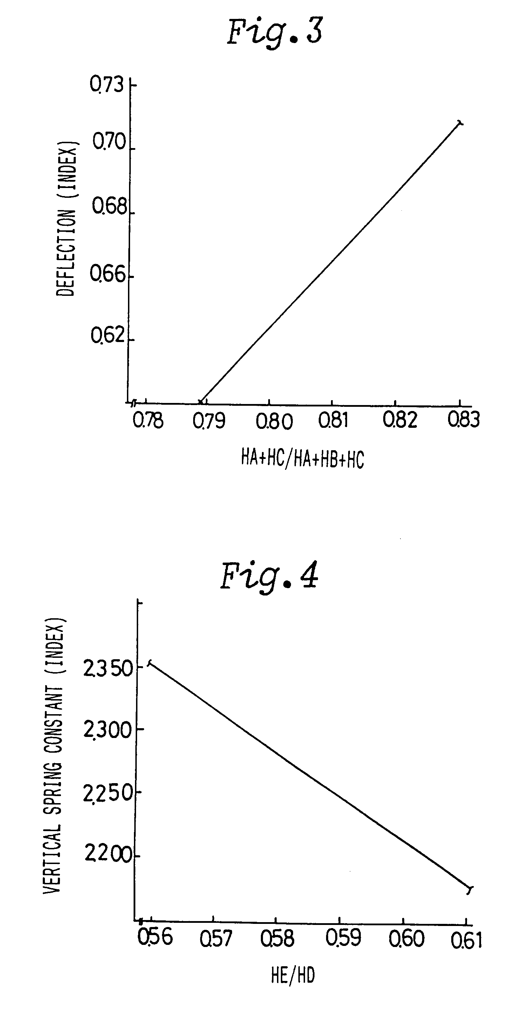

Fig.3 shows the actual relationship for a 185R60R14 tyre between the height ratio (HA + HC)/-(HA + HB + HC) and the amount of maximum deflection as an index.

It was shown that those parameters were in direct proportion.

Fig.4 also shows the actual relationship for a 185/60R14 tyre between the HE/HD ratio and the tyre vertical spring constant as an index.

It was also found that those parameters are in inverse proportion.

Thus by increasing the height ratio (HA + HC)/(HA + HB + HC), the clearance for rim touch was increased, and by decreasing the HE/HD ratio, the tyre vertical spring constant was increased without decreasing the clearance. Thus, the absorbable energy was greatly improved.

By setting the HE/HD ratio to not more than 0.575, the inclination of the sidewall lower portion to the equatorial plane was decreased, and the vertical spring constant of the tyre was increased to improve the resistance to shock.

Preferably, the height ratio (HA + HC)/(HA + HB + HC) is not more than 0.83.

If the height ratio (HA + HC)/(HA + HB + HC) exceeds 0.83, as the thickness of the tread portion 2 decreases, durability and wear life are liable to be decreased, and also running stability is liable to be disturbed.

In addition the HE/HD ratio is preferably, not less than 0.56. If the HE/HD ratio is less than 0.56, the tyre lateral stiffness is liable to excessively decrease and as a result impair ride comfort.

Further, in this example, the tyre shoulder profile is rounded such that a shoulder region SH, defined as the region extending between a point P1 and a point P5, is formed by a single radius arc, the radius RS of which is not less than 0.22 times the ground contacting width W1 measured between the axially outer edges (e) of the ground contacting region under the normal loaded state of the tyre when the tyre is mounted on its regular rim 10 and inflated to its regular inner pressure, where the point P5 is the point on the outer surface of the tyre at the same radial height as the point P2. Note that the single radius region is extended to the edge (e).

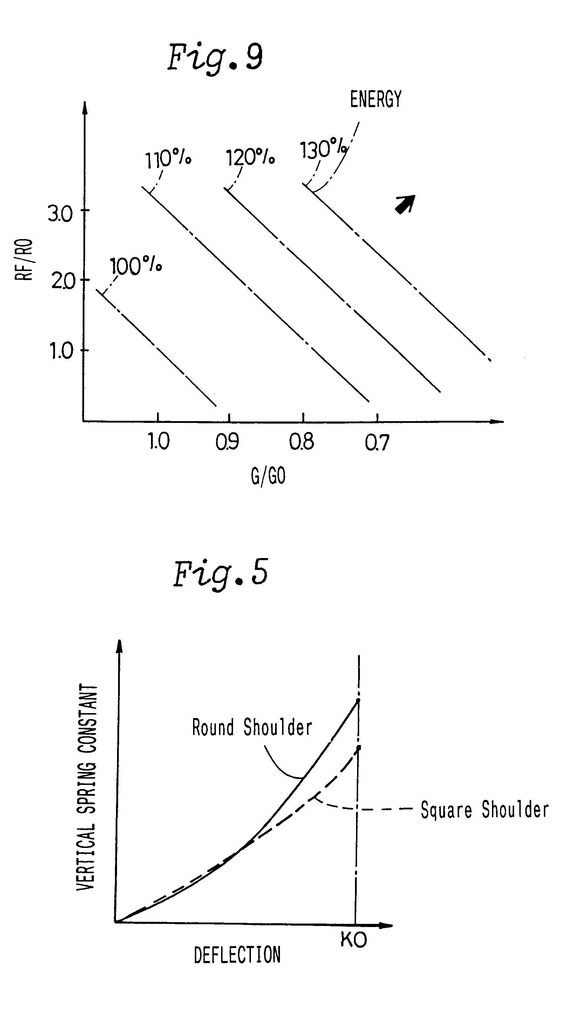

In a tyre having rounded shoulder regions, when the tyre load increases over the regular load, the inclination of the load/deflection curve increases as shown in Fig.5. As a result, the absorbable energy is increased.

Table 1 shows the results of tests on test tyres which had a size of 185/60R14 and constructions as shown in Fig.1(a) with the exception of the (HA + HC)/(HA + HB + HC) ratio, the HE/HD ratio and the shoulder radius RS.

Each test tyre was mounted on a 5.5JX14 rim, and inflated to 2.0 kgf/sq.cm.

The rolling resistances were measured at a constant speed of 80 km/h under a tyre load of 350 kgf, using a drum tester.

The results are indicated by an index based on the reference tyre 1 being 100.

In the rolling resistance test, the smaller the index, the better the result. In the other tests, the larger the index, the better the result.

TABLE 1

| Tyre | Ref.1 | Ref.2 | Ref.3 | Ref.4 | Ex.1 |
|---|---|---|---|---|---|
| (HA + HC)/(HA + HB + HC) | 0.810 | 0.809 | 0.789 | 0.812 | 0.820 |
| HE/HD | 0.606 | 0.593 | 0.570 | 0.567 | 0.575 |
| Shoulder radius RS | 0.186 | 0.212 | 0.176 | 0.203 | 0.273 |
| Test Results | | | | | |
| Absorbable energy | 100 | 104 | 100 | 116 | 124 |
| Deflection | 100 | 100 | 96 | 103 | 109 |
| Spring constant | 100 | 100 | 107 | 105 | 103 |
| Rolling resistance | 100 | 100 | 103 | 102 | 103 |

In the embodiment shown in Fig.1(b), the bead thickness TB measured normally to the tyre inner surface from the point P1 to the tyre outer surface is not more than 0.092 times the radial distance (h) between the point C and the radially outer end of the rim flange 10B; the total (TB + TS) of the bead thickness TB and the shoulder thickness TS measured normally to the tyre inner surface from the point P2 to the tyre outer surface is not more than 0.21 times the radial distance h; and the central point Q1 of the bead thickness TB, the central point Q2 of the shoulder thickness TS, and the central point Q3 of the sidewall thickness at the maximum width position P4 are positioned on a circle L, the radius RD of which is not less than 0.77 times the distance h.

That is, the TB/h ratio is not more than 0.092, the (TB + TS)/h ratio is not more than 0.21, and the RD/h ratio is not less than 0.77.

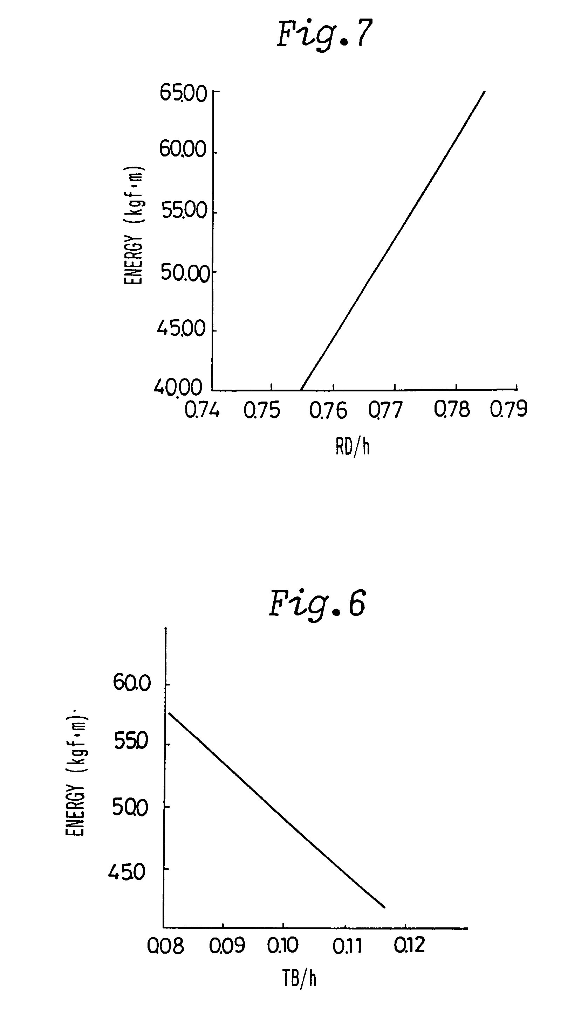

Fig.6 shows the relationship between the TB/h ratio and the maximum absorbable energy for a 185/60R14 tyre size according to a second embodiment of the invention.

These parameters were found to be in inverse proportion.

Fig. 7 shows the relationship between the RD/h ratio and the maximum absorbable energy in a 185/60R14 tyre, it being found that the energy increases as the ratio increases.

Incidentally, the centre line of the thickness of the sidewall portion between the points P1 and P2 is substantially coincide with the above-mentioned circle L.

By decreasing the TB/h ratio, the clearance to the rim touch is increased.

By setting the RD/h ratio to not less than 0.77, the inclination of the sidewall lower portion to the equatorial plane is decreased, and the vertical spring constant of the tyre is increased.

Thus, the absorbable energy is greatly increased.

Preferably, the TB/h ratio and the (TB + TS)/h ratio are respectively, not less than 0.080 and not less than 0.18.

When the TB/h ratio is less than 0.080, and when the (TB + TS)/h ratio is less than 0.18, it becomes difficult to maintain the tyre rigidity and rim touch tends to occur.

Further, the RD/h ratio is preferably not more than 0.79.

If the RD/h ratio is more than 0.79, the tyre lateral stiffness is liable to be decreased, and as a result, steering stability and ride comfort are deteriorated.

Table 2 shows the results of further tests, where the test tyres have a size of 185/60R14 and constructions being substantially same as that shown in Fig.1(b) with the exception of the TB/h ratio, (TB + TS)/h ratio and RD/h ratio.

Each of the test tyres was mounted on a 5.5JX14 rim, and inflated to 2.0 kgf/sq.cm.

The rolling resistance was measured at a constant speed of 80 km/h under a tyre load of 350 kgf, using a drum tester.

The steering stability and ride comfort were evaluated by a test driver.

The results are indicated as an index based on the result for the reference tyre 5 being 100.

In the rolling resistance test, the smaller the index, the better the result. In the other tests, the larger the index, the better the result.

TABLE 2

| Tyre | Ref.5 | Ref.6 | Ref.7 | Ref.8 | Ex.2 |
|---|---|---|---|---|---|
| TB/h | 0.110 | 0.117 | 0.112 | 0.106 | 0.089 |
| (TB + TS)/h | 0.240 | 0.259 | 0.238 | 0.223 | 0.200 |
| RD/h | 0.76 | 0.76 | 0.75 | 0.76 | 0.77 |
| Test Results | | | | | |
| Absorbable energy | 100 | 104 | 100 | 116 | 124 |
| Rolling resistance | 100 | 100 | 103 | 102 | 103 |
| Steering stability | 100 | 101 | 102 | 101 | 100 |
| Ride comfort | 100 | 99 | 101 | 99 | 98 |

In a third embodiment an assembly of a tyre and a rim is provided, wherein to increase the maximum deflection of the tyre, the rim flange is modified.

Therefore, the rim 10X is not the regular rim 10.

Incidentally, the regular rim is the rim officially approved for the tyre by, for example JATMA (Japan), TRA (USA), ETRTO (Europe) and the like.

The rim 10X has the same rim profile as the regular rim 10 with the exception that the upper part of the rim flange 10B, as shown in Fig.8.

The height G of the flange 10B of the rim 10X is decreased to 0.67 to 0.84 times the flange height GO of the regular rim 10, and the radius RF of the curved upper portion 10B2 of the flange is increased to 1.1 to 2.3 times the radius RO of that of the regular rim 10 (shown by a chain line). Here, the flange height G is measured radially from the bead heel point PO to the upper surface of the flange 10B.

By decreasing the height of the rim flange and increasing the radius of curvature of the rim flange in comparison with the regular rim, the clearance to rim touch is greatly increased to increase the absorbable energy of the tyre.

For example, for a regular rim of 6JJX14 size which is approved for the tyre size 185/60R14, the radius RO is 9 mm, and the flange height GO is 18 mm.

Accordingly, for a 185/60R14 tyre, the radius R is 9.9 to 20.7 mm, and the flange height G is 12.1 to 15.1 mm.

On the other hand, in the tyre 1 which is mounted on the rim 10X, as the flange height G is decreased and as the result the above-mentioned height (h) is increased, the parameters concerning this height (h) are changeable to meet the above-explained limitations.

Fig.9 shows the relationship between the flange height ratio G/GO, radius ratio RF/RO and the maximum absorbable energy in combinations of a 185/60R14 tyre and rims whose corresponding rim size is 6JJX14.

Table 3 shows the results of tests and the specifications of the test assemblies, wherein the test tyres had a size of 185/60R14, and the test rims had the same construction and profile as a normal 6JJX14 rim with the exception of the flange height and radius.

The tyre constructions were substantially same as that shown in Fig.1(b) with the exception of the TB/h ratio, (TB + TS)/h ratio and RD/h ratio. The tyre pressure was 2.0 kgf/sq.cm.

The rolling resistance was measured at a constant speed of 80 km/h under a tyre load of 350 kgf, using a drum tester.

The steering stability and ride comfort were evaluated by a test driver.

The results are indicated by indices based on the reference tyre 1 being 100.

In the rolling resistance test, the smaller the index, the better the result. In the other tests, the larger the index, the better the result.

TABLE 3

| Tyre/Rim Assembly | Ref.1 | Ref.2 | Ref.3 | Ex.1 |
|---|---|---|---|---|
| Tyre | | | | |
| TB/h | 0.110 | 0.110 | 0.089 | 0.089 |
| RD/h | 0.76 | 0.76 | 0.77 | 0.77 |
| (TB + TS)/h | 0.24 | 0.24 | 0.200 | 0.200 |
| Rim | | | | |
| Flange height G(mm) | 18 | 18 | 16 | 16 |
| Flange radius RF(mm) | 9 | 7 | 9 | 7 |
| Test Results | | | | |
| Absorbable energy | 100 | 106 | 118 | 124 |
| Rolling resistance | 100 | 102 | 101 | 103 |
| Steering stability | 100 | 100 | 100 | 100 |
| Ride comfort | 100 | 100 | 100 | 100 |

It was confirmed that by increasing the tyre pressure up to 1.15 times the regular pressure, the absorbable energy is greatly increased up to 30% in comparison with a conventional tyre.

As explained above, in the present invention, the maximum deflection of the tyre and the resistance of the sidewall to load are increased, and the absorbable energy of the tyre by its deflection is greatly increased to prevent rim touch and mitigate the shocks to the car body.

**Claims**

1. An assembly of a radial tyre (1) and a rim (10), said radial tyre comprising a tread portion (2), a pair of axially spaced bead portions (4), a pair of sidewalls (3) extending between the bead portions (4), a bead core (5) disposed in each of the bead portions, a radial carcass (6) extending between the bead portions (4) and turned up around the bead cores (5), and a belt (9) disposed radially outside the carcass (6) in the tread portion (4), the said rim (10) comprising a pair of bead seats (10A) for the bead portions (4), and a flange (10B) extending radially outwardly from the axially outer edge of each of the bead seats (10A), said flange (10B) comprising a curved upper portion and a flat lower portion, characterised in that the sidewalls (3) in the normally inflated state of the tyre are bulged-out so as to satisfy the following conditions:

   the total (HA + HC) of a height HA and a height HC is not less than 0.818 times the total (HA + HB + HC) of the height HA, a height HB and the height HC; and

   a distance HE is not more than 0.575 times a distance HD,

   wherein the height HA is the radial distance between a point C and a point P1,

   the height HB is the radial distance between the point P1 and a point P2,

   the height HC is the radial distance between the point P2 and a point P3,

   the distance HD is the radial distance between the point P3 and a point P4,

   the distance HE is the axial distance between the point P3 and the point P4,

   the points C and P1 being on the outer surface of the tyre tread portion (2),

   the points P2, P3 and P4 being on the inner surface of the tyre (1) at the tread portion (2), the bead portion (4) and the sidewall (3), respectively,

   the point C is at the tyre equator CO,

   the points P1, P2, P3 are on a plane (X) which is parallel to the tyre equatorial plane CO and positioned at the bead heel point PO,

   the point P4 is the axially outermost point of the axially inner surface of the sidewall portion,

   the bead heel point PO is the intersecting point between the bead base line and the bead side face line (X), a bead thickness TB measured normally to the tyre inner surface from said point P3 to the tyre outer surface is not more than 0.092 times the radial distance (h) between said point C and the radially outer end of the flange (10B), the central point Q1 of the bead thickness TB, the central point Q2 of the shoulder thickness TS measured normally to the tyre inner surface from said point P2 to the tyre outer surface, and the central point Q3 of the sidewall thickness at said point P4 are positioned on a circle (L)

the radius RD of which is not less than 0.77 times said distance (h).

2.   A radial tyre according to claim 1, characterised in that the shoulder portions of the tyre are rounded such that a shoulder region (SH) extending axially outwardly from said point P1 to a point P5 is formed by a single radius arc, said point P5 being on the outer surface of the tyre at the same radial height as said point P2, the radius RS of said single radius arc is not less than 0.22 times the ground contacting width (W1) measured between the axially outer edges (e) of the ground contacting region under the normal loaded state of the tyre in which the tyre is mounted on its regular rim and inflated to its regular inner pressure and then loaded with its regular load.

3.   An assembly according to claim 1 or 2, characterised in that the tyre is inflated to 1.15 times the regular pressure specified for the tyre.

**Patentansprüche**

1.   Eine Anordnung von einem Radialreifen (1) und einer Felge (10), wobei der Radialreifen einen Lauffächenbereich (2), ein Paar von axial beabstandeten Wulstbereichen (4), ein Paar von Seitenwänden (3), die sich zwischen den Wulstbereichen (4) erstrekken, einen Wulstkern (5), der in jedem der Wulstbereiche angeordnet ist, eine radiale Karkasse (6), die sich zwischen den Wulstbereichen (4) erstreckt und nach oben um die Wulstkerne (5) umgeschlagen ist, und einen Gürtel (9), der radial außerhalb der Karkasse (6) in dem Laufflächenbereich (4) angeordnet ist, aufweist, wobei die Felge (10) ein Paar von Wulstsitzen (10A) für die Wulstbereiche (4) und einen Flansch (10B), der sich radial außerhalb von der axial äußeren Kante von jedem der Wulstsitze (10A) erstreckt, aufweist, wobei der Flansch (10B) einen gekrümmten oberen Bereich und einen flachen unteren Bereich umfaßt, dadurch gekennzeichnet, daß die Seitenwände (3) in dem normal aufgepumpten Zustand des Reifens nach außen gewölbt sind, um den nachfolgenden Bedingungen zu genügen:

die Summe (HA + HC) von einer Höhe HA und einer Höhe HC ist nicht kleiner als das 0,818-fache der Summe (HA + HB + HC) der Höhe HA, einer Höhe HB und der Höhe HC; und

ein Abstand HE ist nicht größer als das 0,575-fache von einem Abstand HD,

wobei die Höhe HA der radiale Abstand zwischen einem Punkt C und einem Punkt P1 ist,

die Höhe HB der radiale Abstand zwischen dem Punkt P1 und einem Punkt P2 ist,

die Höhe HC der radiale Abstand zwischen dem Punkt P2 und einem Punkt P3 ist,

der Abstand HD der radiale Abstand zwischen dem Punkt P3 und einem Punkt P4 ist,

der Abstand HE der radiale Abstand zwischen dem Punkt P3 und dem Punkt P4 ist,

die Punkte C und P1 auf der Außenfläche des Reifenlaufflächenbereiches (2) liegen,

die Punkte P2, P3 und P4 an der Innenfläche des Reifens (1) an dem Laufflächenbereich (2), dem Wulstbereich (4) und der Seitenwand (3) jeweils liegen,

der Punkt C auf dem Reifenäquator CO liegt,

die Punkte P1, P2, P3 in einer Ebene (X) liegen,

die parallel zu der Reifenäquatorialebene CO liegt und an dem Wulstfersenpunkt PO positioniert ist, der Punkt P4 der axial äußerste Punkt der axialen Innenfläche des Seitenwandbereichs ist,

der Wulstfersenpunkt P0 der Schnittpunkt zwischen der Wulstgrundlinie und der Wulstseitenflächenlinie (X) ist, die Wulstdicke TB gemessen normal zu der Reifeninnenfläche von dem Punkt P3 zu der Reifenaußenfläche nicht mehr als das 0,092-fache des radialen Abstandes (h) zwischen dem Punkt C und dem radial äußeren Ende des Flansches (10B) ist, der Mittelpunkt Q1 der Wulstdicke TB, der Mittelpunkt Q2 der Schulterdicke TS gemessen normal zu der Reifeninnenfläche von dem Punkt P2 zu der Reifenaußenfläche und der Mittelpunkt Q3 der Seitenwanddicke an dem Punkt P4 auf einem Kreis (L) liegen, dessen Radius RD nicht größer als das 0,77-fache des Abstandes (h) ist.

2.   Ein Radialreifen nach Anspruch 1, dadurch gekennzeichnet, daß die Schulterbereiche des Reifens abgerundet sind, so daß ein Schulterbereich (SH), der sich axial nach außen von dem Punkt P1 zu einem Punkt P5 erstreckt, durch einen Bogen mit einem einzigen Radius gebildet ist, wobei der Punkt P5 auf der Außenfläche des Reifens in derselben radialen Höhe wie der Punkt P2 liegt, daß der Radius RS des Bogens mit einem einzigen Radius nicht kleiner als das 0,22-fache der Bodenkontaktbreite (W1) gemessen zwischen den axialen Außenkanten (e) des Bodenkontaktbereiches in dem normal belasteten Zustand des Reifens, in dem der Reifen an seiner regulären Felge angebracht ist und auf seinen nominalen Innendruck aufgepumpt und dann mit seiner nominalen Last belastet wird, ist.

**3.** Eine Anordnung nach Anspruch 1 oder 2, dadurch gekennzeichnet, daß der Reifen auf das 1,15-fache des regulären Drucks aufgepumpt ist, der für den Reifen vorgegeben ist.

## Revendications

**1.** Ensemble comprenant un pneumatique (1) à carcasse radiale et une jante (10), le pneumatique à carcasse radiale ayant une partie de bande de roulement (2), une paire de parties axialement espacées (4) de talon, une paire de flancs (3) disposés entre les parties de talon (4), une tringle (5) placée dans chaque partie de talon, une carcasse radiale (6) placée entre les parties de talon (4) et repliée autour des tringles (5), et une ceinture (9) placée radialement à l'extérieur de la carcasse (6) dans la partie de bande de roulement (4), la jante (10) comprenant une paire de sièges (10A) de talon destinés aux parties (4) de talon, et un flasque (10B) disposé radialement vers l'extérieur du bord axialement externe de chacun des sièges de talon (10A), le flasque (10B) ayant une partie supérieure courbe et une partie inférieure plate, caractérisé en ce que les flancs (3), à l'état normalement gonflé du pneumatique, sont bombés vers l'extérieur afin qu'ils remplissent les conditions suivantes :

la somme (HA + HC) d'une hauteur HA et d'une hauteur HC n'est pas inférieure à 0,818 fois la somme (HA + HB + HC) de la hauteur HA, d'une hauteur HB et de la hauteur HC, et

une distance HE ne dépasse pas 0,575 fois une distance HD,

la hauteur HA étant la distance radiale entre un point C et un point P1,

la hauteur HB étant la distance radiale entre le point P1 et un point P2,

la hauteur HC étant la distance radiale entre le point P2 et un point P3,

la distance HD étant la distance radiale entre le point P3 et un point P4,

la distance HE étant la distance axiale entre le point P3 et le point P4,

les points C et P1 se trouvant à la surface externe de la partie (2) de bande de roulement du pneumatique,

les points P2, P3 et P4 se trouvant à la surface interne du pneumatique (1) dans la partie de bande de roulement (2), la partie de talon (4) et le flanc (3) respectivement,

le point C étant à l'équateur CO du pneumatique,

les points P1, P2, P3 se trouvant dans un plan (X) qui est parallèle au plan équatorial CO du pneumatique et passe au point PO de coin de talon,

le point P4 étant le point axialement le plus externe de la surface axialement interne de la partie de flanc,

le point de coin PO de talon étant le point d'intersection de l'axe de base de talon et de l'axe (X) de la face latérale de talon, une épaisseur TB de talon mesurée perpendiculairement à la surface interne du pneumatique depuis le point P3 jusqu'à la surface externe du pneumatique ne dépassant pas 0,092 fois la distance radiale (h) comprise entre le point C et l'extrémité radialement externe du flasque (10B), le point central Q1 de l'épaisseur TB de talon, le point central Q2 de l'épaisseur TS d'épaulement mesurée perpendiculairement à la surface interne du pneumatique depuis le point P2 vers la surface externe du pneumatique et le point central Q3 de l'épaisseur de flanc au point P4 étant placés sur un cercle (L) dont le rayon RD n'est pas inférieur à 0,77 fois la distance (h).

**2.** Pneumatique à carcasse radiale selon la revendication 1, caractérisé en ce que les parties d'épaulement du pneumatique sont arrondies afin qu'une région d'épaulement (SH) disposée axialement vers l'extérieur depuis le point P1 jusqu'à un point P2 soit formée avec un seul arc de cercle, le point P5 se trouvant à la surface externe du pneumatique à la même hauteur radiale que le point P2, le rayon RS de l'arc de cercle unique n'est pas inférieur à 0,22 fois la largeur (W1) de contact avec le sol mesurée entre les bords axialement externes (e) de la région de contact avec le sol à l'état normalement chargé du pneumatique dans lequel le pneumatique est monté sur sa jante normale et est gonflé à sa pression interne nominale et est soumis à sa charge nominale.

**3.** Ensemble selon la revendication 1 ou 2, caractérisé en ce que le pneumatique est gonflé à 1,15 fois la pression nominale spécifiée pour le pneumatique.

# Fig.1 (a)

# Fig. 1·(b)

# Fig.2

*Fig.3*

*Fig.4*

13

Fig.9

Fig.5

# Fig.7

# Fig.6

15

# Fig. 8

## Fig. 10

# Fig.11